# EUROPÄISCHE PATENTANMELDUNG

(11) **EP 1 743 756 A1**
(43) Veröffentlichungstag der Anmeldung: **17.01.2007**
(21) Anmeldenummer: 06013570.4
(22) Anmeldetag: 30.06.2006
(51) Int. Cl.: B29C 45/14, B29C 45/16

(54) **Verfahren zur Herstellung eines Verbundbauteils**

(30) Priorität: 13.07.2005 DE 10532664
(71) Anmelder: Bayer MaterialScience AG, 51368 Leverkusen (DE)
(72) Erfinder: Brambrink, Roland, 40880 Ratingen (DE); Dahmen, Hans-Jörg, 47269 Duisburg (DE); Kohl, Winfried, Isando 1600 (ZA); Zöllner, Olaf, 51375 Leverkusen (DE)

(57) **Zusammenfassung**

Die Erfindung beschreibt ein Verfahren zur Herstellung eines Verbundbauteils, umfassend die folgenden Schritte
(a) Einbringen einer ersten (1) und einer zweiten Folie (2) aus Kunststoff in eine erste Kavität eines Spritzgießwerkzeugs (3),
(b) Einspritzen eines ersten thermoplastischen Kunststoffs in den Hohlraum (5) zwischen der ersten (1) und der zweiten Folie (2),
(c) Entformen des gemäß Schritt (b) hergestellten ersten Formteils (7) und Einbringen des ersten Formteils in eine zweite Kavität (6) des Spritzgießwerkzeugs,
(d) Einspritzen eines zweiten thermoplastischen Kunststoffs in die zweite Kavität (6,3).

## Beschreibung

Die Erfindung betrifft ein Verfahren zur Herstellung eines Verbundbauteils mittels Spritzgießen oder Spritzprägen.

Optische Bauteile, z.B. Scheiben im Automobilbau, werden vorwiegend aus Glas hergestellt, da sie sehr gute Oberflächeneigenschaften, z.B. eine hohe Kratzfestigkeit, aufweisen. Diese Bauteile sind mit hohen Materialkosten verbunden und weisen ein geringes Integrationspotential auf. Dies bedeutet, dass die Bauteile nur mit erheblichem Aufwand mit anderen Formteilen verbunden werden können.

Es ist aber auch bereits bekannt, optische Bauelemente aus transparentem thermoplastischem Kunststoff herzustellen. Diese sind nicht nur leichter und günstiger, sondern können auch erheblich einfacher mit weiteren Formteilen, wie Metall- oder Kunststoffteilen, verbunden werden. Die Kratzfestigkeit von Oberflächen aus transparentem thermoplastischem Kunststoff, muss jedoch durch eine Schutzschicht, z.B. aus Lack, erhöht werden.

Derartige Verbundbauteile aus einem optischen Formteil aus transparentem thermoplastischem Kunststoff werden nach dem Stand der Technik in aufwändigen Verfahren mit mehreren separaten Schritten sowie in mehreren separaten Vorrichtungen hergestellt. Beispielsweise wird zunächst eine Scheibe aus transparentem Kunststoff mittels Spritzgießen hergestellt. Die Scheibe wird anschließend mit einem geeigneten Lack zur Erhöhung der Kratzfestigkeit der Scheibenoberflächen beschichtet. In einem dritten Schritt wird die beschichtete Scheibe in einem weiteren Spritzgießwerkzeug z.B. mit einer Dichtung versehen oder mit einem weiteren Formteil wie z.B. einer Führungsschiene verbunden.

Aufgabe der vorliegenden Erfindung ist es, ein Verfahren zur Herstellung eines Verbundbauteils bereitzustellen, welches wenigstens aus einem beidseitig mit einer Folie beschichteten Kunststoff-Formteil und einem weiteren Formteil besteht. Das Verfahren soll möglichst einfach und in wenigen Schritten durchführbar sein.

Die Erfindung beschreibt ein Verfahren zur Herstellung eines Verbundbauteils, umfassend die folgenden Schritte
(a) Einbringen einer ersten und einer zweiten Folie aus transparentem Kunststoff in eine erste Kavität eines Spritzgießwerkzeugs, so dass die Folien auf gegenüberliegenden Seiten der Kavität gehalten werden und einen zwischen den Folien angeordneten Hohlraum bilden,
(b) Einspritzen eines ersten thermoplastischen Kunststoffs in den Hohlraum zwischen der ersten und der zweiten Folie,
(c) Entformen des gemäß Schritt (b) hergestellten ersten Formteils und Einbringen des ersten Formteils sowie gegebenenfalls wenigstens eines zweiten Formteils in eine zweite Kavität des selben oder eines zweiten Spritzgießwerkzeugs,
(d) Einspritzen eines zweiten thermoplastischen Kunststoffs in die zweite Kavität gegebenenfalls zum Verbinden des ersten und des zweiten Formteils.

Das erfindungsgemäße Verfahren wird in einem Spritzgießwerkzeug mit mindestens zwei Kavitäten durchgeführt. Im Rahmen der vorliegenden Erfindung werden vereinfachend die Begriffe Spritzgießen bzw. Spritzgießwerkzeug verwendet, die jedoch das Spritzprägen bzw. Spritzprägewerkzeug einschließen.

In einer bevorzugten Ausführung wird das erste Formteil in der zweiten Kavität in Schritt (d) nur in seinem Randbereich mit dem zweiten thermoplastischen Kunststoff hinterspritzt, so dass ein transparenter Fensterbereich im ersten Formteil erhalten bleibt.

Die erste und zweite Folie sind vorzugsweise transparent und bestehen bevorzugt aus Polycarbonat (PC), Polymethylmethacrylat (PMMA) oder einem Polycarbonat-Polymethylmethacrylat-Blend. Die beiden Folien können entweder aus dem gleichen oder aus unterschiedlichen Kunststoffen sein. Die Folien weisen vorzugsweise eine Dicke von 0,1 bis 1 mm auf.

In einer bevorzugten Ausführungsform des Verfahrens werden die erste und die zweite Folie vor dem Einbringen in das Spritzgießwerkzeug gemäß Schritt (a) umgeformt, beschnitten, beschichtet und/oder bedruckt. Vorzugsweise werden die erste und zweite Folie mit einem Lack oder einer Schicht aus PMMA beschichtet. Insbesondere eignen sich Hardcoat-Lacke, wie z.B. Siloxan-Lacke oder UV-härtbare Lacke. Für das Beschichten von Folien sind Verfahren aus dem Stand der Technik bekannt. Das Beschichten der ersten und zweiten Folie mit einer Schicht aus PMMA kann beispielsweise mittels Coextrusion erfolgen. Lacke können beispielsweise mittels Sprühen aufgetragen werden. Je nach Art der Beschichtung können die Folien nach dem Beschichten nicht mehr umgeformt werden, sodass das Umformen vor dem Beschichten erfolgen muss. Das Umformen erfolgt beispielsweise mittels Tiefziehen. Die Folien können zusätzlich vor dem Beschichten und dem Tiefziehen mit Siebdruckfarben bedruckt werden.

Die erste und zweite Folie werden gemäß Schritt (a) in eine erste Kavität eines Spritzgießwerkzeugs eingebracht. Sie werden derart eingebracht, dass sie in der Kavität auf Abstand gehalten werden. Das Fixieren der beiden Folien in der Kavität erfolgt in der nach dem Stand der Technik bekannten Weise, z.B. mechanisch, elektrostatisch oder mittels Vakuum.

Die erste und zweite Folie können beispielsweise im Wesentlichen parallel zueinander angeordnet werden. Durch den Abstand zwischen der ersten und zweiten Folie bildet sich in der Kavität ein Hohlraum aus, in den im Schritt (b) ein erster thermoplastischer Kunststoff eingespritzt wird. Dadurch wird ein erstes Formteil gebildet, welches gemäß Schritt (c) entformt wird.

Grundsätzlich kann die Form des ersten Formteils beliebig sein. Zum Beispiel kann das erste Formteil scheibenförmig, plattenförmig oder topfförmig sein, wobei die Scheibe oder Platte beispielsweise eben, gewölbt oder gekrümmt sein kann. Das erste Formteil kann über seine gesamte Fläche die gleiche Dicke oder aber in verschiedenen Bereichen unterschiedliche Dicken aufweisen. Für die Herstellung eines scheibenförmigen Formteils kann die Dicke 3 bis 6 mm betragen.

Bevorzugt handelt es sich bei dem ersten thermoplastischen Kunststoff um einen transparenten Kunststoff. Der erste thermoplastische Kunststoff ist besonders bevorzugt ausgewählt aus der Reihe Polycarbonat (PC), Polymethylmethacrylat (PMMA), transparentes Polyamid (PA), Cyclo-Olefin-Copolymner (COC) oder einer Mischung von zwei oder mehr dieser Polymere. Es kann jedoch für ein nicht transparentes erstes Formteil auch jeder andere thermoplastische Kunststoff verwendet werden, der sich für das Spritzgießen oder Spritzprägen eignet.

Nach dem Entformen wird das erste Formteil in eine zweite Kavität des Spritzgießwerkzeugs eingebracht (Schritt (c)). Das Umsetzen des ersten Formteils kann nach bekannten Verfahren, wie sie beispielsweise beim Mehrfarbenspritzgießen angewendet werden, erfolgen. Typische Verfahren sind einerseits das Umsetzen mit Drehteller, Wendeplatte, Schiebekavität oder Indexplatte oder vergleichbare Verfahren, bei denen das erste Formteil auf dem Kern verbleibt. Andererseits sind aus dem Stand der Technik Verfahren zum Umsetzen eines Formteils bekannt, bei denen das Formteil, z.B. mit Hilfe eines Handhabungssystems, aus einer Kavität entnommen und in eine andere Kavität eingelegt wird.

Außerdem wird bevorzugt wenigstens ein zweites Formteil in die zweite Kavität eingebracht. Das zweite Formteil kann ein beliebiges Formteil aus Kunststoff und/oder Metall sein. Ist das erste Formteil eine transparente Scheibe, die z.B. im Automobilbau eingesetzt wird, kann das zweite Formteil eine Führungsschiene aus Stahl, Aluminium, Polyamid, insbesondere gefülltes Polyamid, oder Polycarbonat sein.

Zum Verbinden des ersten und des zweiten Formteils wird in die zweite Kavität des Spritzgießwerkzeugs ein zweiter thermoplastischer Kunststoff eingespritzt. Der zweite thermoplastische Kunststoff kann z.B. Thermoplastisches Polyurethan (TPU), Thermoplastisches Polyethylen (TPE), PC-Blends, PVC, oder einer der oben genannten transparenten Kunststoffe sowie eine Mischung von diesen Kunststoffen sein.

Gegenstand der Erfindung sind auch Kunststofffenster erhalten nach dem erfindungsgemäßen Verfahren sowie deren Verwendung für den Fahrzeugbau, z.B. von Kraftfahrzeugen, Schiffen oder Flugzeugen oder für Haushaltsgeräte.

Die Erfindung wird nachstehend anhand der Figuren beispielhaft näher erläutert.

Es zeigen
- Fig. 1: das geöffnete Formwerkzeug
- Fig. 2: das geschlossene Formwerkzeug mit Folien
- Fig. 3: die Bereitstellung einer zweiten Formwerkzeughälfte
- Fig. 4: das Einbringen eines Winkels 8
- Fig. 5: das Schließen der Werkzeughälften
- Fig. 6: die wieder geöffneten Werkzeughälften und den angespritzten zweiten Kunststoff

### Beispiel

Das nachfolgende Beispiel beschreibt die Herstellung eines teilweise transparenten Bauteils, welches mit Hilfe eines Metalleinlegers versteift wird und durch außen liegende

Folien vor Verkratzen der Oberfläche geschützt wird. Der Metalleinleger kann neben einer versteifenden Funktion auch als lokale Verstärkung für Verschraubung von Anbauteilen dienen.

In einem ersten Arbeitsschritt wird eine Folie auf Basis von PC (Polycarbonat) mit einer Schicht PMMA (Polymethylmethacrylat) coextrudiert. Zum Einlegen der Folie in eine dreidimensional gestaltete Werkzeugkavität kann diese zunächst in einem Tiefziehprozess umgeformt und beschnitten oder direkt durch den Spritzgießprozess in die entsprechende Form gebracht werden.

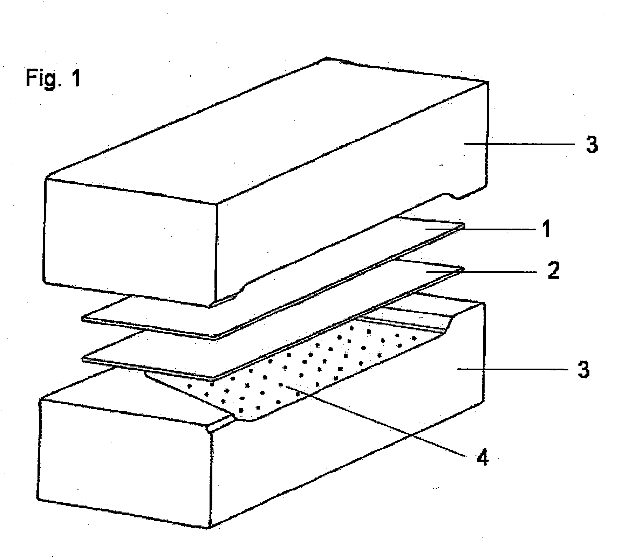

Die erste 1 und zweite 2 coextrudierte Folie wird gemäß Fig. 1 in die geöffneten Hälften 3 des Spritzgusswerkzeugs eingebracht. Hierbei handelt es sich um nicht vorgeformte ebene Folien. Durch kleine Löcher 4 im Werkzeug wird ein Vakuum erzeugt, das die Folien in die Kavität des Werkzeugs presst und positioniert.

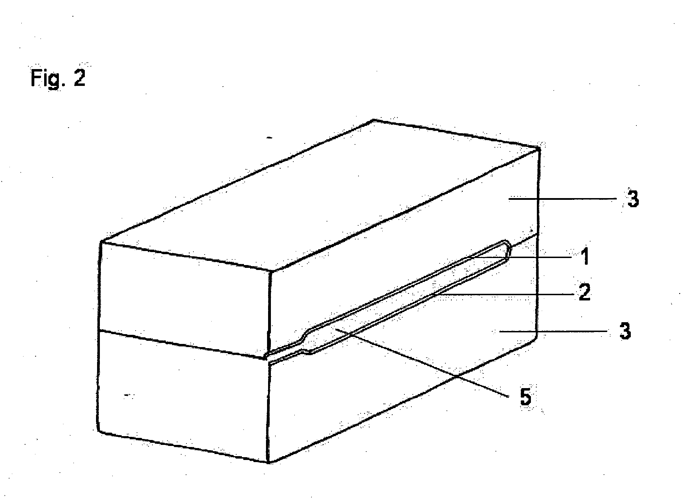

Das Spritzgusswerkzeug wird durch Zusammenfahren der beiden Werkzeughälften 3 geschlossen (Fig.2). Zwischen den Folien entsteht ein Hohlraum 5, der durch Einspritzen eines thermoplastischen Kunststoffs PC (Polycarbonat) gefüllt wird. Die Dicke der so hergestellten Platte beträgt 5mm.

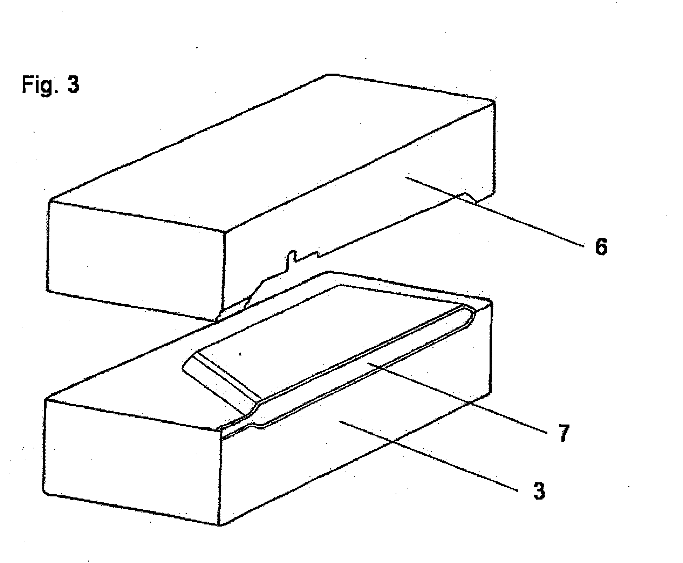

Für den im nächsten Arbeitsschritt einzulegenden Metallwinkel muss das Werkzeug eine neue Kavität erhalten. Die zu wechselnde Kavität befindet sich auf einer so genannten Wendeplatte, die durch Rotation um 180 Grad um ihre Hochachse die alte Kavität wegdreht und die neue Kavität 6 positioniert (Fig.3). Die zuvor spritzgegossene Platte 7 verbleibt in der düsenseitigen Hälfte des Werkzeugs 3.

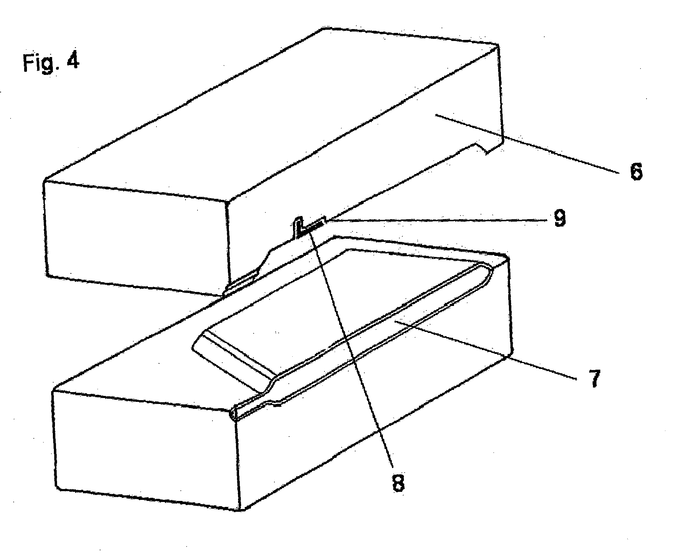

Ein Handhabungssystem positioniert in Fig.4 nun einen metallischen Winkel 8 in die neuen Kavität 6. Die Kavität muss so gestaltet sein, dass zwischen der Wand der Kavität 6 und dem Metalleinleger ein Spalt 9 von 2,5 mm Höhe vorhanden ist.

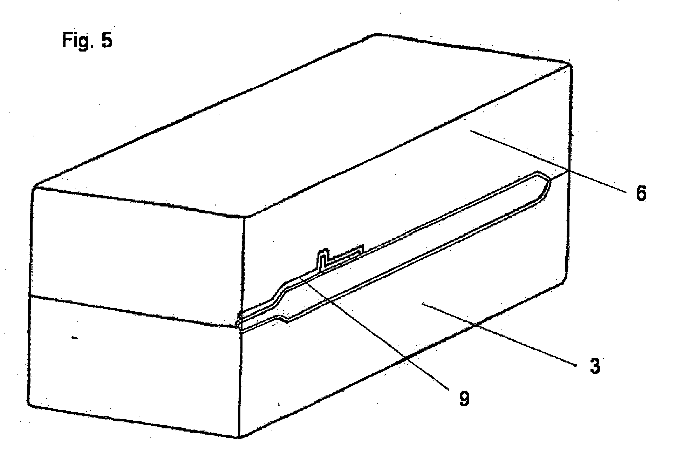

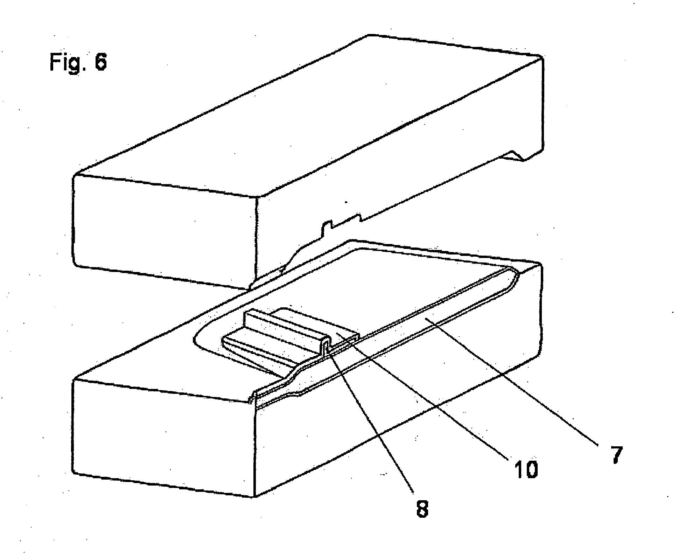

Die beiden Werkzeughälften 3 und 6 werden erneut zugefahren (Fig. 5). Eine zweite thermoplastische Komponente wird in den Spalt 9 eingespritzt. Als Werkstoff wird hierfür ein PC/PET Blend verwendet. In Fig. 6 ist die zweite thermoplastische Komponente 10 sichtbar. Sie umschließt den Metalleinleger 8 vollständig und geht eine stark haftende Verbindung mit der darunter liegenden spritzgegossenen Platte 7 ein.

## Patentansprüche

1. Verfahren zur Herstellung eines Verbundbauteils, umfassend die folgenden Schritte
(a) Einbringen einer ersten und einer zweiten Folie aus transparentem Kunststoff in eine erste Kavität eines Spritzgießwerkzeugs, so dass die beiden Folien auf gegenüberliegenden Seiten der Kavität gehalten werden und einem zwischen den Folien angeordneten Hohlraum bilden,
(b) Einspritzen eines ersten thermoplastischen Kunststoffs in den Hohlraum zwischen der ersten und der zweiten Folie,
(c) Entformen des gemäß Schritt (b) hergestellten ersten Formteils und Einbringen des ersten Formteils in eine zweite Kavität desselben oder eines zweiten Spritzgießwerkzeugs,
(d) Einspritzen eines zweiten thermoplastischen Kunststoffs in die zweite Kavität.

2. Verfahren nach Anspruch 1, **dadurch gekennzeichnet, dass** mit dem ersten Formteil im Schritt (c) wenigstens ein zweites Formteil in die zweite Kavität eingelegt und in Schritt (d) mit dem ersten Formteil durch den zweiten thermoplastischen Kunststoff verbunden wird.

3. Verfahren nach einem der Ansprüche 1 oder 2, **dadurch gekennzeichnet, dass** das erste Formteil in der zweiten Kavität in Schritt (d) mit dem zweiten thermoplastischen Kunststoff in seinem Randbereich unter Erhalt eines transparenten Fensters im ersten Formteil umspritzt wird.

4. Verfahren nach einem der Ansprüche 1 bis 3, **dadurch gekennzeichnet, dass** die erste und die zweite Folie vor dem Einbringen in das Spritzgießwerkzeug gemäß Schritt (a) verformt, beschnitten, beschichtet und/oder bedruckt werden.

5. Verfahren nach einem der Ansprüche 1 bis 4, **dadurch gekennzeichnet, dass** die erste und zweite Folie auf mindestens einem der Werkstoffe Polycarbonat (PC), Polymethylmethacrylat (PMMA) oder einem Polycarbonat-Polymethylmethacrylat-Blend basieren.

6. Verfahren nach einem der Ansprüche 1 bis 5, **dadurch gekennzeichnet, dass** der erste thermoplastische Kunststoff transparent ist.

7. Verfahren nach Anspruch 6, **dadurch gekennzeichnet, dass** der erste thermoplastische Kunststoff ausgewählt ist aus der Reihe: Polycarbonat (PC), Polymethylmethacrylat (PMMA), transparentes Polyamid (PA) oder Cyclo-Olefin-Copolymer (COC) oder einer Mischung dieser Polymere.

8. Verfahren nach einem der Ansprüche 1 bis 7, **dadurch gekennzeichnet, dass** das zweite Formteil aus Kunststoff und/oder Metall besteht.

9. Verfahren nach einem der Ansprüche 1 bis 8, **dadurch gekennzeichnet, dass** der zweite thermoplastische Kunststoff ausgewählt ist aus der Reihe: Thermoplastisches Polyurethan (TPU), Thermoplastisches Polyethylen (TPE), Polycarbonat (PC), PC-Blends, PMMA, transparentes Polyamid (PA), Cyclo-Olefin-Copolymer, PVC oder einer Mischung dieser Polymere.

10. Kunststofffenster hergestellt nach einem der Ansprüche 1 bis 9.

11. Verwendung des Fensters nach Anspruch 10 für Haushaltsgeräte oder im Fahrzeugbau, insbesondere für Kraftfahrzeuge oder im Schiffs- oder Flugzeugbau.
